# EUROPEAN PATENT SPECIFICATION

(11) **EP 1 441 932 B1**
(45) Date of publication and mention of the grant of the patent: **07.12.2005**
(21) Application number: 02738571.5
(22) Date of filing: 10.06.2002
(51) Int. Cl.: B60R 25/00

(54) **AUTOMOTIVE BRAKE/CLUTCH LOCK**
VERRIEGELUNGSEINRICHTUNG FÜR FAHRZEUG-BREMSE/ODER -KUPPLUNG
FRETTE DE FREIN/EMBRAYAGE DE VEHICULE AUTOMOBILE

(30) Priority: 29.10.2001 US 40048
(43) Date of publication of application: 04.08.2004
(73) Proprietor: Chantrasuwan, Watchara, Bangkok 10230 (TH); Petcharapirat, Suwat, Pranburi, Pracuabkirikhan 77120 (TH)
(72) Inventor: Chantrasuwan, Watchara, Bangkok 10230 (TH); Petcharapirat, Suwat, Pranburi, Pracuabkirikhan 77120 (TH)
(74) Representative: Boyce, Conor
(86) International application number: PCT/IE2002/000077
(87) International publication number: WO 2002/102630

(56) References cited:
- GB-A- 1 097 889
- US-A- 1 366 992
- US-A- 1 494 219

## Description

### FIELD OF THE INVENTION

The present invention relates generally to a locking device for securing the brake and/or clutch pedals of a vehicle to restrict movement of the pedals to prevent theft of the vehicle and, more particularly, to a locking device which has a dual locking mechanism to further enhance the performance of the locking device.

### BACKGROUND OF THE INVENTION

Various locking devices have been proposed which lock a brake and/or clutch pedal of a vehicle to prevent movement of the pedals and, thus, substantially preclude theft of the vehicle, even if a potential thief is able to start the engine of the vehicle. Such locking devices provide a single locking mechanism to secure the pedals in a locked position. The locking devices do not provide a secondary locking mechanism to further limit or preclude the possibility that a potential thief may pick or break the locking mechanism.

GB 1,097,889 discloses a locking device suitable for securing at least one pedal of a vehicle in a non-operable state, the vehicle having a steering column, said locking device comprising: a pedal engaging member adaptable to engage the at least one pedal of the vehicle; a first locking mechanism movable between a first position and a second position, said first locking mechanism being adapted to secure the at least one pedal of the vehicle in the non-operable state when in said second position; and a mounting member for mounting said locking device to the steering column of the vehicle.

Some double locking mechanisms have been proposed which include a second locking device to further limit or preclude the possibility of theft of the vehicle. The second lock is typically a padlock which is inserted through a pair of aligned openings in the locking mechanism when the locking mechanism is locked in position at the pedal or pedals. An example of such a locking device is shown in Thailand Patent Certificate No. 10218, dated Mar. 14,2001 which corresponds to the preamble of claim 1. It is, therefore, inconvenient to lock and unlock the second locking mechanism, since it requires inserting and removing a secondary lock to the locking device. Additionally, such double locking mechanisms are non-adjustable and thus must be made in various lengths, such that a locking device of an appropriate length must be selected for a particular vehicle or type of vehicle. Also, such double locking mechanisms typically include complicated components which are difficult to manufacture, thus leading to increased costs of the locking devices.

### SUMMARY OF THE INVENTION

The present invention provides a locking device characterized in that: said first locking mechanism comprises an outer shaft and an inner shaft, said inner shaft being secured to said pedal engaging member and movable to move said pedal engaging member relative to the at least one pedal of the vehicle, said first locking mechanism further comprises a lock member positioned at said inner shaft, said lock member being movable to a locking position when said inner shaft is moved a sufficient amount to engage said pedal engaging member with the at least one pedal, said lock member limiting movement of said inner shaft when in said locking position, and in that said second lock mechanism comprises a second lock pin which is movable to engage an opening through respective walls of said inner and outer shafts.

The present invention is intended to provide a simplified and adjustable double locking device for limiting movement of the brake and/or clutch pedals of a vehicle when locked thereto.

Preferably, the double locking device includes two separate key locks for locking and unlocking the locking device and, thus, the pedals. The locking device is adjustable so it may be easily adapted for use on various vehicles.

In one form, the mounting member includes a collar member which is closeable around the steering column to secure the locking device to the steering column. The locking device preferably includes a biasing member to bias the pedal engaging member toward its disengaged position.

These and other objects, advantages, purposes and features of this invention will become apparent upon review of the following specification in conjunction with the drawings.

### BRIEF DESCRIPTION OF THE DRAWINGS

FIG. 1 is a perspective view of a locking device in accordance with the present invention, as mounted to a steering column of a vehicle;
FIG. 2 is a perspective exploded view of the locking device shown in FIG. 1;
FIG. 3 is a sectional view taken along the line III-III in FIG. 1;
FIGS. 4A and 4B are perspective views of a mounting collar useful with the present invention;
FIG. 5 is a perspective view of a first locking mechanism in accordance with the present invention;
FIG. 6 is a partial sectional view of the locking device of the present invention, with the first locking mechanism in its unlocked position, with portions removed to show the first locking mechanism of FIG. 5;
FIG. 7 is a partial sectional view of the locking device of the present invention similar to FIG. 6, with the first locking mechanism in its locked position;
FIG. 8 is a perspective view of a second locking mechanism in accordance with the present invention;
FIG. 9 is a partial sectional view of the locking device of the present invention, with the second locking mechanism in its unlocked position, with portions removed to show the second locking mechanism of FIG. 8;
FIG. 10 is a partial sectional view similar to FIG. 9, with the second locking mechanism in its locked position;
FIG. 11 is a side elevation of the locking device of the present invention; and
FIG. 12 is a top plan view of the locking device of FIG. 11.

### DESCRIPTION OF THE PREFERRED EMBODIMENTS

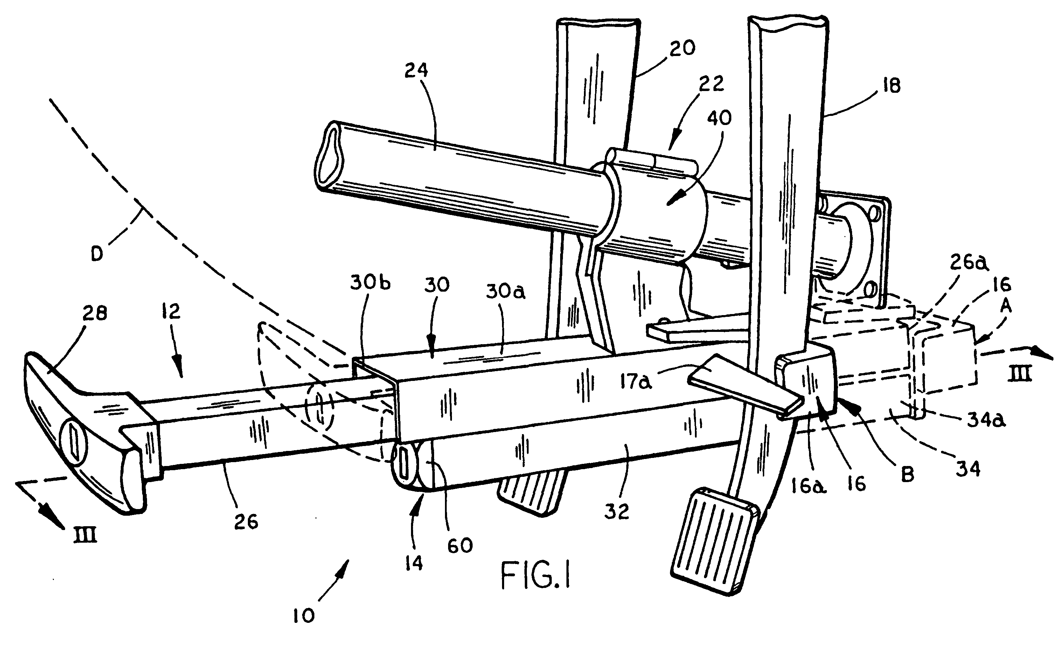

Referring now to the drawings and the illustrative embodiments depicted therein, a pedal locking device 10 includes a first locking mechanism 12 and a second locking mechanism 14 (FIG. 1). Locking device 10 includes a pedal bracket 16, which is movable to engage and restrain or secure a brake pedal 18 and/or a clutch pedal 20 of a vehicle in which locking device 10 is installed. Locking device 10 further includes a mounting bracket 22, which may be positioned at and secured to a steering column 24 of the vehicle, in order to mount and secure locking device 10 to the vehicle at an appropriate position.

First locking mechanism 12 includes an elongated inner shaft or tube member 26, which has a T-handle 28 at one end 26a and the pedal bracket 16 welded or otherwise secured at the other end 26b. When T-handle 28 is pulled, inner shaft 26 slides outwardly from a first outer elongated shaft or tube member 30 and moves the pedal bracket 16 from a disengaged position (as shown in phantom at A in FIG. 1) to an engaged position (as shown with the solid lines at B in FIG. 1), to engage the pedal or pedals of the vehicle to prevent use of the pedals and thus to secure the vehicle.

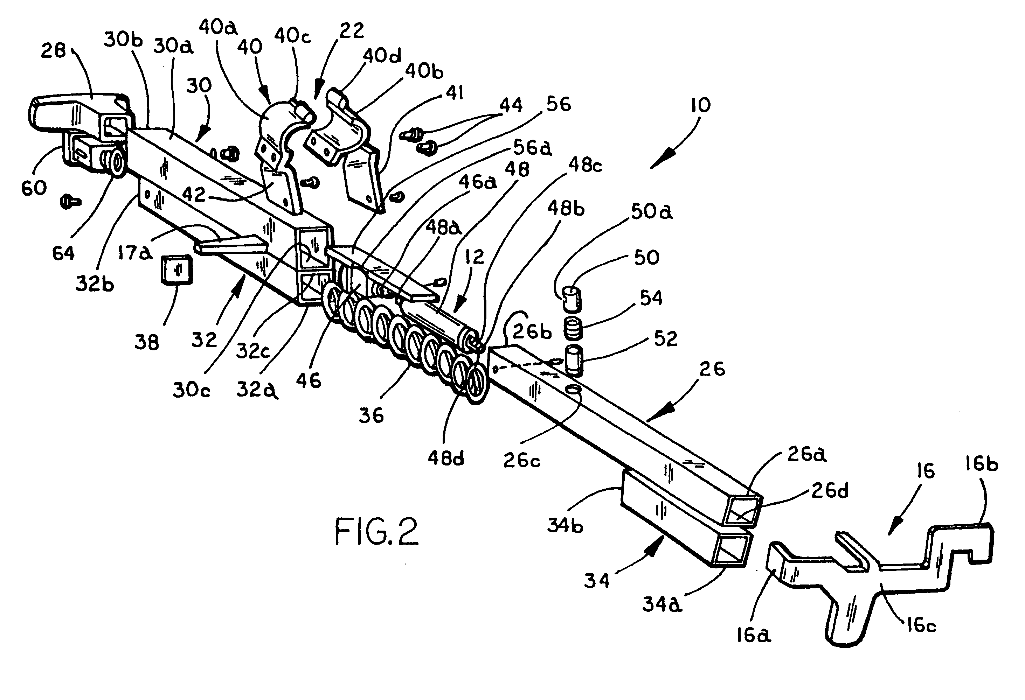

Second locking mechanism 14 functions to further secure locking device 10 at the pedals 18, 20 to further limit or substantially preclude theft of the vehicle. The second locking member 14 is mounted at an end of a second outer elongated shaft or tube member 32, which is generally parallel and adjacent to the first elongated outer shaft 30. Outer elongated shaft 32 includes an inner elongated shaft or tube member 34 extending from one end 32a, which is also welded or otherwise secured to the pedal bracket 16 and is slidable within outer shaft 32 between the engaged and disengaged position, similar to inner shaft 26 of first locking mechanism 12, discussed above. A biasing member 36 (FIG. 2) is positioned within outer shaft 32 and between an inner end 34b of inner shaft 34 and a stop plate or bracket 38 welded or otherwise positioned within outer shaft 32. Biasing member 36 functions to bias inner shaft 34 toward its outward or extended position, in order to bias pedal bracket 16 towards it disengaged position A (FIG. 1), where the pedal bracket 16 is remote from the pedals 18, 20.

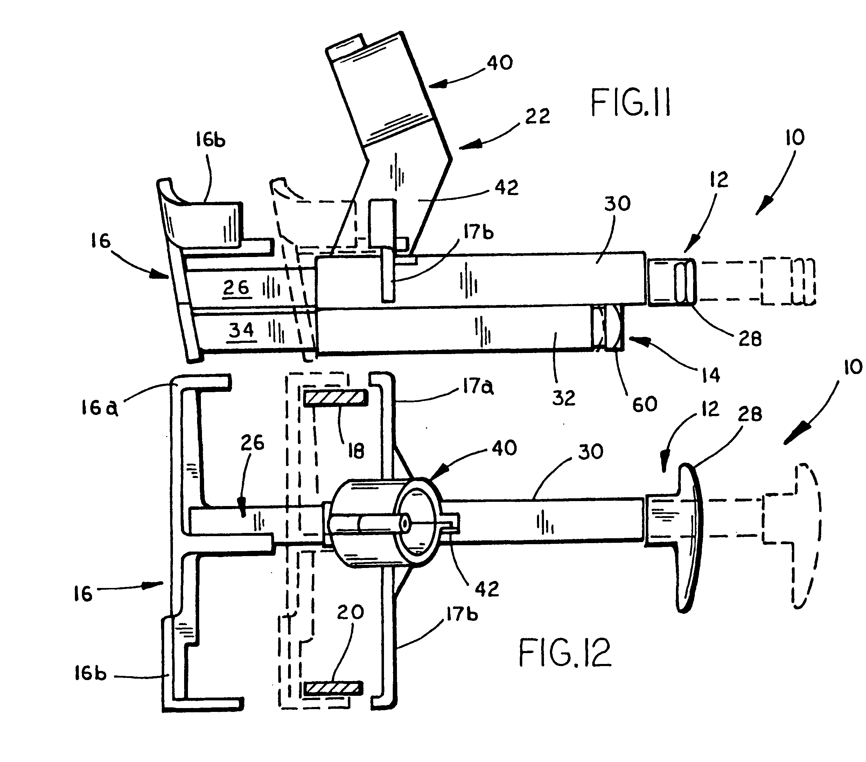

As best shown in FIGS. 1, 2, 11 and 12, pedal bracket 16 includes a pair of arms 16a, 16b extending laterally outward from a center portion 16c, which is welded or otherwise secured to the ends 26a and 34a of inner shafts 26 and 34, respectively. The laterally extending arms 16a, 16b include curved ends, such that the pedal bracket 16 defines a pair of generally U-shaped arms for engaging and retaining the pedals 18 and 20 therewithin. The curved ends prevent lateral movement of the pedals to unhook them from the locking device 10 and thus assist in preventing use of the pedals when locking device 10 is in its locked position. A pair of laterally extending wings or brackets 17a, 17b are preferably positioned along outer shaft 30 and/or 32 and may provide an oppositely turned end portion (as best shown in FIG. 12), such that the corresponding arms or wings 16a, 17a and 16b, 17b, function to substantially surround and thus preclude movement of the pedals 18, 20, respectively, when locking device 10 is in its locked orientation (as shown in phantom in FIGS. 11 and 12). The locking device 10 is secured in this position via pulling out the T-handle 28 a sufficient amount and pushing in locking mechanism 12 into outer shaft 32 (as also shown in phantom in FIGS. 11 and 12), as discussed below.

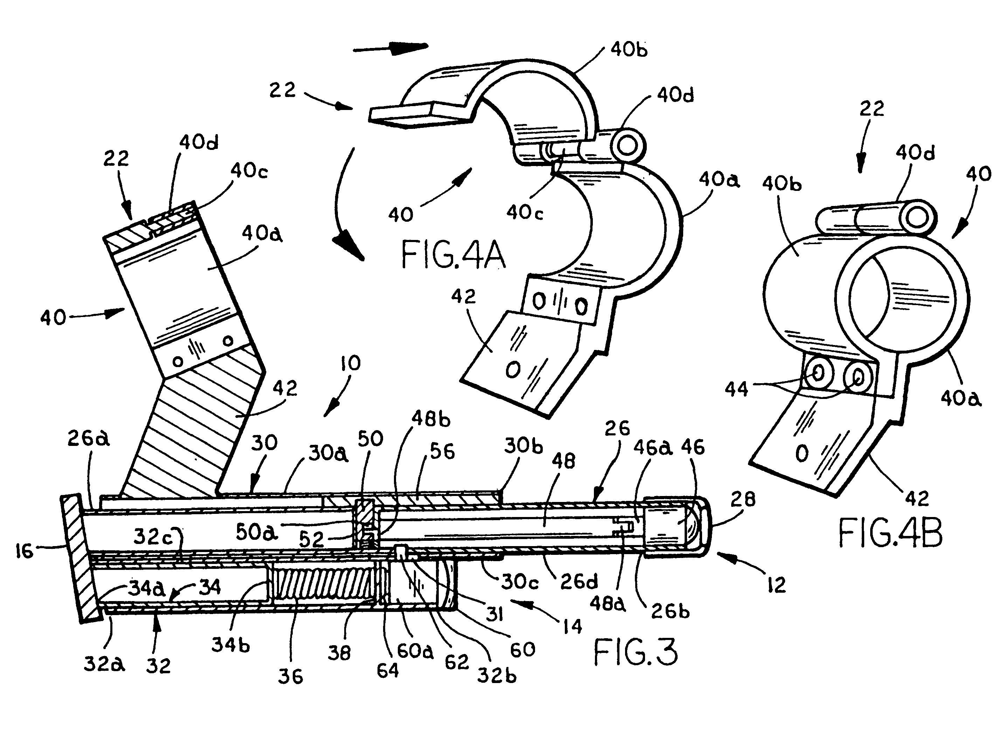

As best shown in FIGS. 1, 2, 4A and 4B, mounting bracket 22 includes a hinged collar portion 40 formed at an outer end of a mounting leg 42, which is welded or otherwise secured to an upper portion of outer shaft 30. Hinged collar portion 40 includes a pair of half-collar members 40a, 40b, which are pivotally connected via a pivot pin 40c inserted within a guide bushing 40d at one or both collar portions 40a, 40b. Collar members 40a, 40b are pivotable between an open position (FIG. 4A) for positioning the collar portion 40 along the steering column, and a closed position (FIG. 4B) for closing and clamping around the steering column to secure locking device 10 in an appropriate position along the steering column.

As shown in FIGS. 2 and 4B, collar portion 40 is secured in its closed position via a pair of setscrews or other fastening means 44 to secure the collar portions 40 in its closed position tightly around the steering column 24 of the vehicle. After the collar portion 40 has been tightly secured about the steering column via fastening means 44, a cover plate 41 may be secured to mounting leg 42, in order to further secure collar portion 40 in its closed position to maintain tight clamping on the steering column of the vehicle.

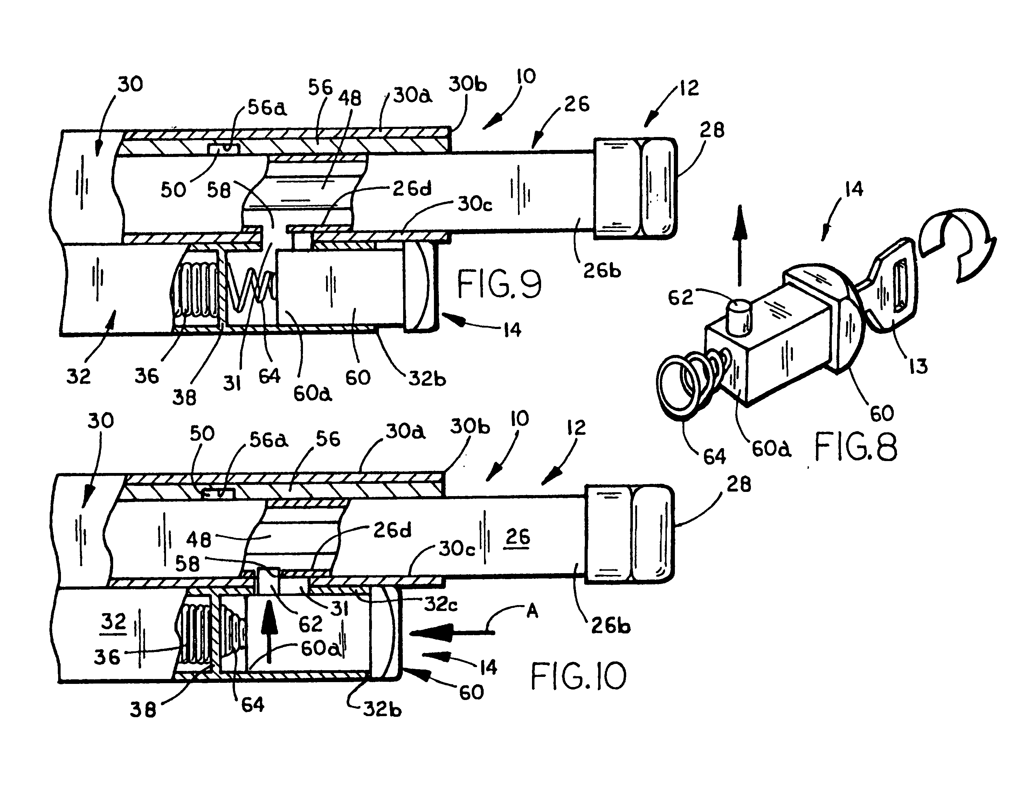

In the illustrated embodiment, mounting leg 42 of mounting bracket 22 is welded or otherwise secured to an upper wall 30a of outer shaft 30. Outer shafts 30 and 32 are also welded or otherwise secured together such that outer shaft 30 and first locking mechanism 12 are positioned above outer shaft 32 and second locking mechanism 14. As shown in FIG. 1, when mounting bracket 22 is properly mounted along the steering column 24 of the vehicle, outer ends 30b and 32b of outer shafts 30 and 32, respectively, are positioned generally at or forward of an edge of the dashboard (shown generally at D in FIG. 1). The present invention thus is substantially out of the way and does not interfere with a driver driving the vehicle when the locking device is unlocked. The outer shaft and inner shafts are shown as having a generally square cross section, which allows the outer shafts 30, 32 to mate together along their adjacent walls 30c, 32c, respectively. As best shown in FIGS. 9 and 10, the adjacent walls 30c and 32c of outer shafts 30 and 32, respectively, include an opening or passageway 31 therethrough for receiving a lock pin 62 of second locking mechanism 14, as discussed below.

Although shown and described as having a square outer shaft 30 on top of a square outer shaft 32, the orientation of the shafts relative to one another and the shape of the shafts are not critical to the present invention. It is envisioned that the first locking mechanism 12 may be positioned beneath the second locking mechanism 14 or the locking mechanisms may be positioned side by side one anther, without affecting the scope of the present invention. Additionally, although shown as generally square or rectangular tubes or shafts, the inner and outer shafts of the locking device of the present invention may be other forms, such as generally cylindrical tubes or shafts or the like, without affecting the scope of the present invention.

Referring now to FIGS. 1-3 and 5-7, first locking mechanism 12 includes a lock cylinder 46, which is positioned within T-handle 28 at end 26b of inner shaft 26. Second locking mechanism 12 further includes a rotatable shaft 48 which is connected between lock cylinder 46 and a movable lock pin 50. Rotatable shaft includes an engaging portion 48a, which extends from one end of rotatable shaft 48 and engages a corresponding engaging portion 46a of a lock mechanism (not shown) within lock cylinder 46, such that rotation of a key 13 in lock mechanism 46b causes a corresponding rotation of engaging portion 46a and thus of rotatable shaft 48.

Rotatable shaft 48 also includes a half circular or cammed engaging portion 48b, which extends from an opposite end of rotatable shaft 48 from engaging portion 48a. Engaging portion 48b engages a notch 50a in lock pin 50, as best seen in FIGS. 3, 6 and 7, which is slidable within a cylindrical guide 52 secured within inner shaft 26. Inner shaft 26 further includes a circular opening or aperture 26c at an end of lock pin 50 to allow for insertion of cylindrical guide 52 and lock pin 50 into inner shaft 26. Cammed engaging portion 48b of rotatable shaft 48 includes a generally flat surface 48c generally along its diameter or center line and a curved or cammed surface 48d, which engages a surface 50b of a notch 50a in lock pin 50, in order to cause movement of lock pin 50 when rotatable shaft is rotated. A biasing member or spring 54 is further included within cylindrical guide 52, to bias lock pin 50 outwardly from inner shaft 26 and toward a lock plate 56, which is welded or otherwise secured along one of the walls, such as upper wall 30a of outer shaft 30. As best seen in FIG. 2, lock plate 56 is a generally rectangular plate and includes a notched or recessed portion 56a along one side for receiving lock pin 50 therein when first locking mechanism 12 is moved to its locking position, as discussed below.

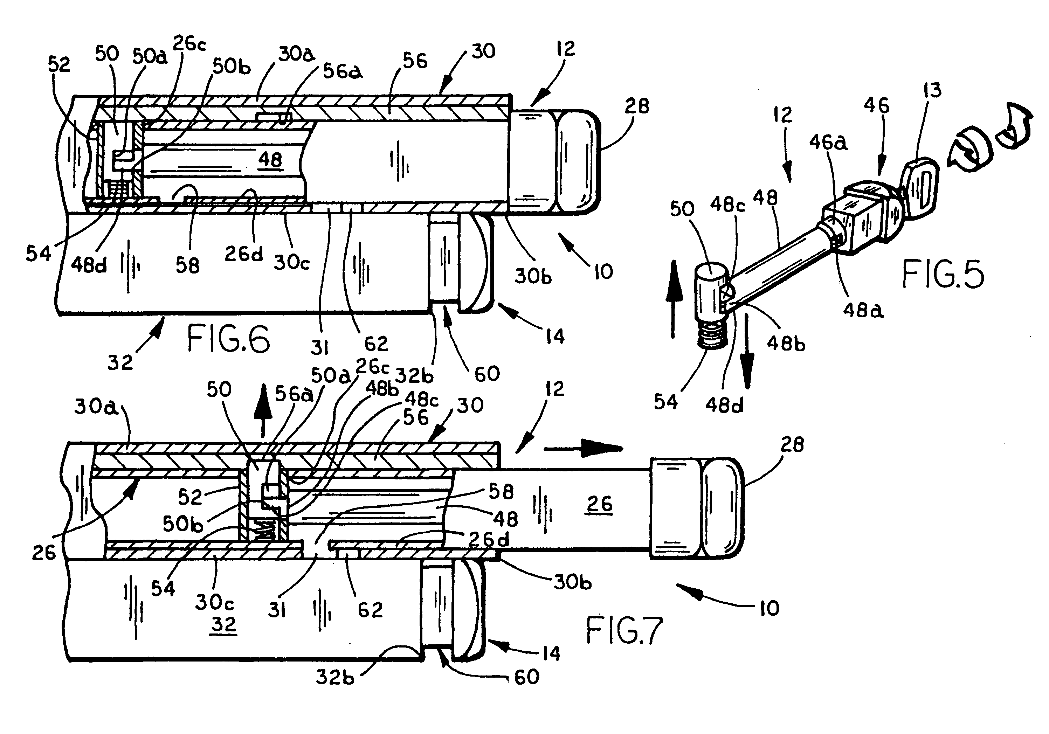

As shown in FIG. 5, turning key 13 in one direction causes rotation of the locking mechanism within lock cylinder 46, which further causes rotation of engaging portion 46a and thus of rotatable shaft 48. As rotatable shaft 48 rotates, the half cylindrical engaging portion or extension 48b rotates within notched portion 50a of lock pin 50. The half cylindrical shape of engaging portion 48a functions to move lock pin 50 towards its disengaged position, or in the downward position, as shown in FIG. 6, when the rounded or cammed surface 48d of engaging portion 48a contacts surface 50b of notched portion 50a of lock pin 50, thereby pushing lock pin 50 away from lock plate 56 and compressing biasing member 54. Rotation of the key 13 in the opposite direction again causes rotation of engaging portion 48a within notched portion 50a, whereby the flat surface 48c of engaging portion 48a allows lock pin 50 to extend outwardly due to the force exerted by biasing member 54, as the flat surface 48c is moved to face surface 50b of notched portion 50a of lock pin 50. Although turning the key in this manner allows lock pin 50 to extend outwardly due to biasing member 54 to lock locking mechanism 12 in its locked position, lock pin 50 cannot extend outwardly until inner shaft 26 is moved along outer shaft 30 to align lock pin 50 with recessed portion 56a of lock plate 56, as can be seen in FIGS. 6 and 7.

Accordingly, locking device 10 may be actuated by turning the key 13 to its locking position, whereby the flat surface 48c of engaging portion 48a is facing toward surface 50b within notched portion 50a of lock pin 50. T-handle 28 may then be pulled outwardly to pull inner shaft 26 along outer shaft 30 until locking pin 50 is aligned with recess 56a in lock plate 56. When such alignment occurs, biasing member 54 functions to extend locking pin 50 outward from cylindrical guide 52 in inner shaft 26 to engage recess 56a in lock plate 56, thereby locking inner shaft 26 and pedal bracket 16 in position. Mounting bracket 22 is positioned along the steering column 24, such that this locked position corresponds to the appropriate position with respect to the pedals 18, 20, such that the pedals are substantially locked in place by pedal bracket 16 and corresponding pedal brackets 17a, 17b on outer shaft 30 or 32. As shown in FIG. 7, when T-handle 28 and inner shaft 26 are moved to this locking position, an opening 58 in one wall 26d of inner shaft 26 is generally aligned with opening or passageway 31 in adjacent walls 30c and 32c of outer shafts 30 and 32, respectively.

Referring now to FIGS. 8-10, second locking mechanism 14 includes a lock cylinder 60, which is operable to extend and retract a lock pin 62. Locking mechanism 14 further includes a biasing member 64, which is mounted at an inner end 60a of lock cylinder 60, and engages inner plate 38 of outer shaft 32. As shown generally in FIG. 8, rotation of key 13 within lock cylinder 60 causes extension of lock pin 62 for locking second locking mechanism 14 in its locked state, as discussed below. Locking pin 62 may be biased, such as via a spring or other biasing means (not shown), towards its extended position, such that rotation of key 13 functions to retract lock pin 62 to unlock locking mechanism 14. Removal of key 13 would then allow the pin 62 to move or be biased toward its extended position, in order to lock second locking mechanism 14 in its locked orientation, as discussed below.

As shown in FIG. 9, second locking mechanism 14 is positioned within outer shaft 32, such that lock cylinder 60 extends partially outwardly from outer end 32b of outer shaft 32. Inner end 60a of lock cylinder 60 is inserted within outer shaft 32, such that biasing member 64 is positioned between stop plate 38 and inner end 60a of lock cylinder. In its unlocked position, as shown in FIG. 9, lock pin 62 extends partially outwardly from lock cylinder 60 and is received within opening 31 through outer shafts 30 and 32, and cannot extend further due to its contact with wall 26d of inner shaft 26.

As shown in FIGS. 9 and 10, when first locking mechanism 12 is in its locked position, inner shaft 26 extends outwardly from outer shaft 30 such that opening 58 in inner shaft 26 is aligned with opening or passageway 31 in outer shafts 30 and 32. Lock cylinder 60 may then be depressed inwardly toward outer shaft 32 (in the direction of arrow A in FIG. 10), such that lock cylinder 60 moves inwardly and compresses biasing member 64 against stop wall 38. When lock cylinder 60 has been depressed a sufficient amount, lock pin 62 is aligned with opening 58 and extends outwardly and at least partially through opening 58 in inner shaft 26, as shown in FIG. 10. Once lock pin 62 has been received through opening 58 in inner shaft 26, lock pin 62 functions to prevent movement of inner shaft 26 relative to outer shafts 30 and 32, irrespective of a position of lock pin 50 of first locking mechanism 12, such that locking device 10 is prevented from being unlocked.

Accordingly, when both locking mechanisms 12 and 14 are locked, pedal bracket 16 is secured in place at the pedals 18 and 20 of the vehicle, such that the pedals cannot be moved toward their depressed position by an operator of the vehicle. In order to unlock locking device 10, and thus to release the pedals to allow use of the vehicle, both locking mechanisms 12 and 14 must be unlocked. To release second locking mechanism 14, key 13 is inserted and rotated within lock cylinder 60 to at least partially retract lock pin 62, in order to move lock pin 62 out of opening 58 in inner shaft 26. Once lock pin 62 has been retracted a sufficient amount, biasing member 64 functions to push lock cylinder 64 outward from within outer shaft 32, such that lock pin 62 is moved away from opening 58, as shown in FIG. 9.

Once the second locking mechanism 14 has been unlocked, first locking mechanism 12 is unlocked via turning of key 13 within lock cylinder 46 to cause rotation of rotatable shaft 48. As rotatable shaft 48 rotates, the curved or cammed surface 48b of extension 48a engages the surface 50b of lock pin 50 and pushes or moves lock pin 50 against biasing member 54 to its retracted position, such that lock pin 50 is removed from the recessed portion 56a of lock plate 56. Once lock pin 50 has been removed from recess portion 56a of lock plate 56, biasing member 36 functions to bias or push inner shaft 34 outwardly from outer shaft 32, which further moves inner shaft 26 within outer shaft 30 in the same direction, due to the pedal bracket 16 being welded or otherwise secured to the ends 34a, 26a of both inner shafts 34, 26, respectively. Inner shaft 26 and T-handle 28 are thus moved to their unlocked or released position, whereby pedal bracket 16 is moved away from pedals 18 and 20, such that the pedals may then again be depressed and the vehicle thus may be driven.

Therefore, the present invention provides a locking device for retaining the brake and/or clutch pedals of a vehicle in a locked and thus unusable position via a dual locking mechanism. The dual locking mechanism of the present invention substantially precludes the possibility of a potential thief picking or otherwise unlocking the two locks without the appropriate key or keys. The lock cylinders of the dual locking mechanisms may be keyed for the same key or may require a different key, to further reduce the possibility of the locking device being unlocked by a person without the appropriate keys.

The locking device of the present invention is adjustable to adapt to different vehicles, without requiring specially manufactured parts or specially cut lengths of shafts for each different type or make of vehicle. The present invention is adjustable via sliding the mounting collar bracket along the steering column of the subject vehicle until the pedal bracket is positioned at the appropriate location with respect to the pedals in both the locked and unlocked position. The mounting bracket is then clamped to the steering column to prevent further movement therealong, and the locking device is secured in its position in the vehicle. No additional mounting brackets or fasteners are required to secure the locking device of the present invention to the floorboard or other parts of the vehicle. Because the locking device of the present invention is not restricted by the position of the dashboard panel, the locking device may be made to fit most or all models of cars with the same length inner and outer shafts. This provides for improved manufacturing processes and lower cost assemblies, since multiple length parts are not required for various models of locking devices and vehicles.

The present invention also provides for easy locking and unlocking of the locking mechanisms, since the locking process simply requires pulling on the T-handle for the first locking mechanism and pushing against the lock cylinder for the second locking mechanism. Because of the biasing members of the locking device of the present invention, unlocking both locking mechanisms is also easy to accomplish by simply turning the key or keys in each of the two lock cylinders of the dual locking mechanisms. The two biasing members then function to move the respective locking mechanisms to their unlocked positions.

Changes and modifications in the specifically described embodiments may be carried out without departing from the principles of the invention, which is intended to be limited only by the scope of the appended claims, as interpreted according to the principles of patent law.

## Claims

1. A locking device (10) suitable for securing at least one pedal of a vehicle in a non-operable state, the vehicle having a steering column (24), said locking device comprising:
a pedal engaging member (16) adaptable to engage the at least one pedal (18, 20) of the vehicle;
a first locking mechanism (12) movable between a first position and a second position, said first locking mechanism being adapted to secure the at least one pedal of the vehicle in the non-operable state when in said second position;
a mounting member (22) for mounting said locking device to the steering column of the vehicle,
said first locking mechanism is movable between the first position, where said pedal engaging member is disengaged from the at least one pedal, and the second position, where said pedal engaging member is engaged with the at least one pedal, said locking device including a second locking mechanism (14) for securing said first locking mechanism in said second position, said mounting member being configured to be adjustably positioned along the steering column of the vehicle to position said locking device such that said pedal engaging member is positioned remote from the at least one pedal when said first locking mechanism is in said first position **characterised in that**
said first locking mechanism comprises an outer shaft (30) and an inner shaft (26), said inner shaft being secured to said pedal engaging member and movable to move said pedal engaging member relative to the at least one pedal of the vehicle,
said first locking mechanism further comprises a lock member (50) positioned at said inner shaft, said lock member being movable to a locking position when said inner shaft is moved a sufficient amount to engage said pedal engaging member with the at least one pedal, said lock member limiting movement of said inner shaft when in said locking position, and **in that**
said second lock mechanism comprises a second lock pin (62) which is movable to engage an opening (58) through respective walls of said inner and outer shafts.

2. The locking device of claim 1, wherein said mounting member comprises a collar member (40) which is closable around the steering column to secure said locking device to the steering column.

3. The locking device of claim 1 further including a biasing member (36) to bias said pedal engaging member toward the disengaged position.

4. The locking device of claim 1, wherein said lock member is biased toward said locking position and movable to said locking position when said inner shaft moves to align said lock member with a lock recess (56a) positioned along said outer shaft.

5. The locking device of claim 4, wherein said lock member is movable to an unlocking position via an unlocking member interconnected with said lock member, said unlocking member being movable to cause movement of said lock member away from said lock recess and to an unlocking position.

6. The locking device of claim 5, wherein said lock member comprises a lock pin (50) and said unlocking member comprises a rotatable shaft (48), said rotatable shaft having a cammed engaging portion (48b) which engages a recess (50a) within said lock pin such that rotation of said rotatable shaft causes translational movement of said lock pin toward said unlocking position.

7. The locking device of claim 1, wherein said second lock mechanism is movable to position said second lock pin at said opening after said inner shaft is moved said sufficient amount.

8. The locking device of claim 7, wherein said second lock pin is biased to extend toward said opening and said second lock mechanism is biased to position said second lock pin remote from said opening where said second lock pin is not aligned with said opening.

## Patentansprüche

1. Verriegelungsvorrichtung (10), die zum Befestigen mindestens eines Pedals eines Fahrzeugs in einem nicht bedienbaren Zustand geeignet ist, wobei das Fahrzeug eine Lenksäule (24) aufweist, und die genannte Verriegelungsvorrichtung aufweist:
ein pedalergreifendes Element (16), das zum Ergreifen des mindestens einen Pedals (18, 20) des Fahrzeugs anpassbar ist;
einen ersten Verriegelungsmechanismus (12), der zwischen einer ersten Position und einer zweiten Position bewegbar ist, wobei der genannte erste Verriegelungsmechanismus ausgelegt ist, um das mindestens eine Pedal des Fahrzeugs in dem nicht bedienbaren Zustand zu befestigen, wenn es in der genannten zweiten Position ist;
ein Einbauelement (22) zum Anbringen der genannten Verriegelungsvorrichtung an der Lenksäule des Fahrzeugs,
wobei der genannte erste Verriegelungsmechanismus zwischen der ersten Position, wo das genannte pedalergreifende Element von dem mindestens einen Pedal gelöst ist, und der zweiten Position bewegbar ist, wo das genannte pedalergreifende Element mit dem mindestens einen Pedal in Eingriff steht, wobei die genannte Verriegelungsvorrichtung einen zweiten Verriegelungsmechanismus (14) zum Befestigen des genannten ersten Verriegelungsmechanismus in der genannte zweiten Position aufweist, und das genannte Einbauelement konfiguriert ist, um anpassbar entlang der Lenksäule des Fahrzeugs positioniert zu werden, um die genannte Verriegelungsvorrichtung derart zu positionieren, dass das genannte pedalergreifende Element von dem mindestens einen Pedal entfernt positioniert ist, wenn der genannte erste Verriegelungsmechanismus sich in der genannten ersten Position befindet, **dadurch gekennzeichnet, dass**
der genannte erste Verriegelungsmechanismus eine äußere Welle (30) und eine innere Welle (26) aufweist, wobei die genannte innere Welle an dem genannten pedalergreifenden Element befestigt und bewegbar ist, um das genannte pedalergreifende Element in bezug zu dem mindestens einen Pedal des Fahrzeugs zu bewegen,
der genannte erste Verriegelungsmechanismus ferner ein Verriegelungselement (50) aufweist, das an der genannten inneren Welle positioniert ist, wobei das genannte Verriegelungselement zu einer Verriegelungsposition bewegbar ist, wenn die genannte innere Welle in ausreichendem Ausmaß bewegt wird, um das genannte pedalergreifende Element mit dem mindestens einen Pedal zu ergreifen, wobei das genannte Verriegelungselement die Bewegung der genannten inneren Welle begrenzt, wenn es sich in der genannten Verriegelungsposition befindet, und **dass**
der genannte zweite Verriegelungsmechanismus einen zweiten Verriegelungsstift (62) aufweist, der bewegbar ist, um in eine Öffnung (58) durch jeweilige Wände der genannten inneren und äußeren Welle einzugreifen.

2. Verriegelungsvorrichtung nach Anspruch 1, bei der das genannte Einbauelement ein Kragenelement (40) aufweist, das um die Lenksäule herum verschließbar ist, um die genannte Verriegelungsvorrichtung an der Lenksäule zu befestigen.

3. Verriegelungsvorrichtung nach Anspruch 1, die ferner ein Vorspannungsmittel (36) zum Vorspannen des genannten pedalergreifenden Elements in Richtung auf die gelöste Position aufweist.

4. Verriegelungsvorrichtung nach Anspruch 1, bei der das genannte Verriegelungselement in Richtung auf die genannte Verriegelungsposition vorgespannt ist und zu der genannten Verriegelungsposition bewegbar ist, wenn die genannte innere Welle sich bewegt, um das genannte Verriegelungselement mit einer Verriegelungsausnehmung (56a) auszurichten, die entlang der genannten äußeren Welle positioniert ist.

5. Verriegelungsvorrichtung nach Anspruch 4, bei der das genannte Verriegelungselement zu einer Entriegelungsposition über ein Entriegelungselement bewegbar ist, das mit dem genannten Verriegelungselement verbunden ist, wobei das genannte Entriegelungselement bewegbar ist, um Bewegung des genannten Verriegelungselements von der genannten Verriegelungsausnehmung weg und zu einer Entriegelungsposition zu verursachen.

6. Verriegelungsvorrichtung nach Anspruch 5, bei der das genannte Verriegelungselement einen Verriegelungsstift (50) aufweist, und das genannte Entriegelungselement eine Drehwelle (48) aufweist, wobei die genannte Drehwelle einen nockenartigen Eingriffsteil (48b) aufweist, der in eine Ausnehmung (50a) innerhalb des genannten Verriegelungsstifts eingreift, so dass Drehung der genannten Drehwelle Übersetzungsbewegung des genannten Verriegelungsstifts in Richtung auf die Entriegelungsposition verursacht.

7. Verriegelungsvorrichtung nach Anspruch 1, bei der der genannte zweite Verriegelungsmechanismus bewegbar ist, um den genannten zweiten Verriegelungsstift an der genannten Öffnung zu positionieren, nachdem die genannte innere Welle um das genannte ausreichende Ausmaß bewegt worden ist.

8. Verriegelungsvorrichtung nach Anspruch 7, bei der der genannte zweite Verriegelungsstift vorgespannt ist, um sich in Richtung auf die genannte Öffnung auszustrecken, und der genannte zweite Verriegelungsmechanismus vorgespannt ist, um den genannten zweiten Verriegelungsstift von der genannten Öffnung entfernt zu positionieren, wo der genannte zweite Verriegelungsstift nicht mit der genannten Öffnung ausgerichtet ist.

## Revendications

1. Dispositif de blocage (10) étudié pour immobiliser au moins une pédale d'un véhicule dans un état de non-fonctionnement, le véhicule possédant une colonne de direction (24), ledit dispositif de blocage comprenant :
un élément d'engagement de pédale (16) adaptable pour s'engager avec la au moins une pédale (18, 20) du véhicule ;
un premier mécanisme de blocage (12) apte à être déplacé entre une première et une deuxième position, ledit premier mécanisme de blocage étant adapté pour immobiliser la au moins une pédale du véhicule dans l'état de non-fonctionnement lorsqu'il se trouve dans ladite deuxième position ;
un élément de montage (22) pour monter ledit dispositif de blocage sur la colonne de direction du véhicule ;
ledit premier mécanisme de blocage est apte à être déplacé entre la première position, dans laquelle ledit élément d'engagement de pédale est désengagé de la au moins une pédale, et la deuxième position, dans laquelle ledit élément d'engagement de pédale est engagé avec la au moins une pédale, ledit dispositif de blocage incluant un deuxième mécanisme de blocage (14) pour immobiliser ledit premier mécanisme de blocage dans ladite deuxième position, ledit élément de montage étant configuré pour être positionné de façon réglable le long de la colonne de direction du véhicule afin de positionner ledit dispositif de blocage de manière telle que ledit élément d'engagement de pédale est positionné loin de la au moins une pédale lorsque ledit premier mécanisme de blocage se trouve dans ladite première position, **caractérisé en ce que**
ledit premier mécanisme de blocage comprend un axe externe (30) et un axe interne (26), ledit axe interne étant fixé sur ledit élément d'engagement de pédale et apte à être déplacé afin de déplacer ledit élément d'engagement de pédale par rapport à la au moins une pédale du véhicule,
ledit premier mécanisme de blocage comprend en outre un élément de verrou (50) qui est positionné au niveau dudit axe interne, ledit élément de verrou étant apte à être déplacé vers une position de verrouillage lorsque ledit axe interne est déplacé sur une distance suffisante afin d'engager ledit élément d'engagement de pédale avec la au moins une pédale, ledit élément de verrou limitant le mouvement dudit axe interne lorsqu'il se trouve dans ladite position de verrouillage, et **en ce que**
ledit deuxième mécanisme de blocage comprend une deuxième broche de verrouillage (62) qui est apte à être déplacée pour s'engager dans une ouverture (58) à travers des parois respectives desdits axes interne et externe.

2. Le dispositif de blocage de la revendication 1, dans lequel ledit élément de montage comporte un élément collier (40) qu'il est possible de fermer autour de la colonne de direction afin d'immobiliser ledit dispositif de blocage sur la colonne de direction.

3. Le dispositif de blocage de la revendication 1, incluant en outre un élément de poussée (36) afin de pousser ledit élément d'engagement de pédale vers la position de désengagement.

4. Le dispositif de blocage de la revendication 1, dans lequel ledit élément de verrou est poussé vers ladite position de verrouillage et est apte à être déplacé vers ladite position de verrouillage lorsque ledit axe interne se déplace afin d'aligner ledit élément de verrou avec un évidement de verrou (56a) qui est positionné le long dudit axe externe.

5. Le dispositif de blocage de la revendication 4, dans lequel ledit élément de verrou est apte à être déplacé vers une position de déverrouillage par l'intermédiaire d'un élément de déverrouillage qui est interconnecté avec ledit élément de verrou, ledit élément de déverrouillage étant apte à être déplacé afin de provoquer le mouvement dudit élément de verrou et l'éloigner dudit évidement de verrou et l'amener vers une position de déverrouillage.

6. Le dispositif de blocage de la revendication 5, dans lequel ledit élément de verrou comprend une broche de verrouillage (50) et ledit élément de déverrouillage comprend un axe rotatif (48), ledit axe rotatif possédant une section d'engagement à came (48b) qui s'engage dans un évidement (50a) prévu dans ladite broche de verrouillage de manière telle que la rotation dudit axe rotatif provoque un mouvement de translation de ladite broche de verrouillage vers ladite position de déverrouillage.

7. Le dispositif de blocage de la revendication 1, dans lequel ledit deuxième mécanisme de blocage est apte à être déplacé afin de positionner ladite deuxième broche de verrouillage au niveau de ladite ouverture, une fois que ledit axe interne a été déplacé sur ladite distance suffisante.

8. Le dispositif de blocage de la revendication 7, dans lequel ladite deuxième broche de verrouillage est poussée pour s'étendre vers ladite ouverture et ledit deuxième mécanisme de blocage est poussé afin de positionner ladite deuxième broche de verrouillage loin de ladite ouverture dans laquelle ladite deuxième broche de verrouillage n'est pas alignée avec ladite ouverture.
